# EUROPÄISCHE PATENTSCHRIFT

(11) **EP 3 498 419 B1**
(45) Veröffentlichungstag und Bekanntmachung des Hinweises auf die Patenterteilung: **21.06.2023**
(21) Anmeldenummer: 18210509.8
(22) Anmeldetag: 05.12.2018
(51) Int. Cl.: B23Q 1/00

(54) **SPANNSYSTEM**
TENSIONING SYSTEM
SYSTÈME DE SERRAGE

(30) Priorität: 13.12.2017 DE 102017129683
(43) Veröffentlichungstag der Anmeldung: 19.06.2019
(73) Patentinhaber: Schunk GmbH & Co. KG Spann- und Greiftechnik, 74348 Lauffen am Neckar (DE)
(72) Erfinder: Schräder, Philipp, 88512 Mengen-Blochingen (DE); Damang, Markus, 72458 Albstadt (DE); Schlüssel, Marcel, 8303 Bassersdorf (CH)
(74) Vertreter: DREISS Patentanwälte PartG mbB

(56) Entgegenhaltungen:
- EP-A1- 0 818 270
- EP-A1- 2 036 661
- DE-U1- 8 701 619
- GB-A- 2 259 267
- US-A- 3 094 283
- US-A1- 2016 263 716

## Beschreibung

Die Erfindung betrifft eine Spannsystem, insbesondere ein Nullpunktspannsystem, mit einem eine Spannaufnahme und Spannmittel aufweisenden Spannmodul und mit einer ein Spannelement aufweisenden Spannpalette, wobei das Spannelement zum Spannen der Spannpalette am Spannmodul mit der Spannaufnahme zusammenwirkt und die Spannmittel in eine Verriegelungslage derart verlagerbar sind, dass die Spannpalette in axialer Richtung gegen das Spannmodul beaufschlagt wird. Das Spannelement kann dabei bolzenartig ausgebildet sein und in eine als Ausnehmung ausgebildete Spannaufnahme eingeführt werden. Andererseits ist denkbar, dass das Spannelement ringartig ausgebildet ist und dass die Spannaufnahme bolzenartig ausgebildet ist. Die Erfindung betrifft ferner ein dazugehöriges Einsatzelement, ein dazugehöriges Spannmodul und eine dazugehörige Spannpalette.

Derartige Spannsysteme sind aus dem Stand der Technik vorbekannt. Wird dabei die Spannpalette am Spannmodul verspannt, so bindet der insbesondere bei Nullpunktspannsystemen übliche Spannbolzen lediglich die translatorischen Freiheitsgrade. Der rotatorische Freiheitsgrad um die Achse des Spannmoduls wird demgegenüber regelmäßig nicht fixiert. Eine Drehsicherung gegen ein Verdrehen der Spannpalette gegenüber dem Spannmodul entlang einer um die Spannaufnahme verlaufenden Kreisbahn ist somit nicht vorhanden.

Aus der EP 2 036 661 A1 ist ein Spannsystem nach dem Oberbegriff des Anspruchs 1 mit jeweils einem Zentrierring am Zylinder und am Kolben bekannt, wobei an einem Zentrierring federnde Lippen und an dem anderen Zentrierring Nocken zu Positionierung eines Werkstücks angeordnet sind.

In der EP 0 818 270 A1 ist eine Aufspannvorrichtung mit in Nuten angeordneten Zentrierzapfen zur Feinpositionierung eines Spannelements gegenüber einem Kupplungselement in der X-Y-Ebene offenbart.

Aus der US 2016/0263716 A1 ist ein Spannsystem mit in Nuten angeordneten Positioniersteinen zur Positionierung in der X-Y-Ebene bekannt.

In der G 87 01 619 U1 ist ein System zu Positionierung eines Werkstücks gegenüber einer Werkzeugmaschine mit gegen elastisch verformbare Kupplungsflächen wirkenden kreiszylindrischen Bolzen offenbart.

Der Erfindung liegt daher die Aufgabe zugrunde, den Nachteilen des Standes der Technik Abhilfe zu schaffen.

Diese Aufgabe wird durch ein Spannsystem mit den Merkmalen des Anspruchs 1 gelöst. Es ist demnach vorgesehen, dass am Spannmodul bzw. an der Spannpalette ein zumindest abschnittsweise elastisch nachgiebiger Wirkabschnitt vorgesehen ist und dass an der Spannpalette bzw. dem Spannmodul ein Gegenabschnitt vorgesehen ist, wobei der Wirkabschnitt mit dem Gegenabschnitt zur Drehsicherung zusammenwirkt.

Folglich kann am Spannmodul ein abschnittsweise elastisch nachgiebiger Wirkabschnitt vorgesehen sein. An der Spannpalette kann ein Gegenabschnitt vorgesehen sein. Selbstverständlich kann die Konfiguration auch umgekehrt sein, so dass an der Spannpalette der Wirkabschnitt vorgesehen ist und am Spannmodul der Gegenabschnitt vorgesehen ist.

Dadurch, dass der Wirkabschnitt mit dem Gegenabschnitt zur Drehsicherung zusammenwirkt, kann auch der rotatorische Freiheitsgrad festgesetzt werden. Somit kann zunächst eine Lageausrichtung und daraufhin eine Verdrehsicherung durchgeführt werden. Insbesondere kann hierbei auch eine Zentrierung in die Drehrichtung, also entlang einer um die axiale Richtung verlaufenden Kreisbahn, stattfinden.

Dadurch, dass der Wirkabschnitt zusätzlich abschnittsweise elastisch nachgiebig ist, kann ein auf das System wirkendes Drehmoment aufgenommen werden. Dadurch ist das System langlebig und besitzt zudem eine sehr hohe Wechselwiederholgenauigkeit. Folglich kann eine Drehsicherung bereitgestellt werden, und dennoch kann aufgrund der Elastizität ein Drehmoment aufgenommen werden, um eine Beschädigung des Spannsystems zu verhindern, wenn eine Kraft, die ein Verdrehen der Spannpalette gegenüber dem Spannmodul bewirken würde, auftritt.

Eine weitere vorteilhafte Ausgestaltung der Erfindung sieht vor, dass der Wirkabschnitt an einem Kragarm vorgesehen ist, und wobei der Kragarm beim Spannen gebogen wird. Die Elastizität kann folglich insbesondere durch die Biegung bereitgestellt werden. Ferner kann die Biegung derart ausgebildet sein, dass eine gewisse Flexibilität in axialer Richtung vorhanden ist, während eine Steifheit in Drehrichtung derart vorhanden ist, dass eine Abstützung gegen ein Verdrehen der Spannpalette vorhanden ist. In diesem Zusammenhang ist insbesondere denkbar, dass durch das Biegen ein Verspannen der Spannpalette am Spannmodul in Drehrichtung erfolgt und dadurch die Steifheit ausgebildet wird.

Erfindungsgemäß ist der Wirkabschnitt in einer Aussparung im Spannmodul bzw. in der Spannpalette vorgesehen. Dadurch kann eine Fixierung des rotatorischen Freiheitsgrads bereitgestellt werden. Dennoch können die Oberseite des Spannmoduls und die Unterseite der Spannpalette aneinander zur Anlage kommen und damit gegeneinander gespannt werden.

Erfindungsgemäß ist der Wirkabschnitt an einem Einsatzelement angeordnet, wobei das Einsatzelement in der Aussparung vorgesehen ist. Das Einsatzelement kann insbesondere lösbar in der Aussparung angeordnet sein. Bei einer Beschädigung oder Abnutzung des Einsatzelements kann dieses folglich ganz einfach ausgetauscht werden. Ferner ist denkbar, dass für das Einsatzelement unabhängig vom Material der Spannpalette bzw. des Spannmoduls unterschiedlichste Materialien und Wärmebehandlungsverfahren eingesetzt werden und somit eine höchst individuelle Anpassung des Einsatzelements an die Verwendungsbedingungen durchführbar ist.

Das Einsatzelement kann insbesondere in die Aussparung eingepresst sein.

Erfindungsgemäß ist das Einsatzelement einstückig ausgebildet. Dies erlaubt eine besonders kostengünstige Herstellung. Der Kragarm samt Wirkabschnitt kann hierbei insbesondere mittels spanabhebender Verfahren in das Einsatzelement eingebracht sein. Denkbar ist ein Fräsvorgang und/oder ein Bohrvorgang.

Erfindungsgemäß umfasst der Wirkabschnitt zwei einander zugewandte Schrägflächen, sodass der Gegenabschnitt beim Spannen zwischen den Schrägflächen verklemmt wird. Dadurch kann eine besonders vorteilhafte Ausrichtung der Spannpalette und des Spannmoduls zueinander bereitgestellt werden. Dennoch kann eine Verdrehsicherung effizient bereitgestellt werden.

Vorteilhafterweise begrenzen die beiden Schrägflächen zusammen mit einer dazwischen liegenden Verbindungsfläche eine Aufnahme für den Gegenabschnitt in axialer Richtung. In diese Aufnahme kann der Gegenabschnitt eingeführt werden und darin verspannt werden.

Vorzugsweise sind zwei einander zugewandte Kragarme vorgesehen, wobei jeder Kragarm eine der beiden einander zugewandten Schrägfläche aufweist. Somit kann beim Spannvorgang der Gegenabschnitt zwischen den beiden Kragarmen verspannt werden. Aufgrund der Schrägflächen kann folglich insbesondere ein Verkeilen stattfinden. Dadurch kann eine besonders effiziente Drehsicherung sowie ein gleichzeitiges Zentrieren in Drehrichtung durchgeführt werden.

Eine besonders bevorzugte Weiterbildung der Erfindung ergibt sich daraus, dass der Gegenabschnitt zylindrisch, insbesondere kreiszylindrisch, ausgebildet ist, und wobei sich der Gegenabschnitt in einer radialen Richtung erstreckt, die zur axialen Richtung orthogonal ist. Der Gegenabschnitt kann folglich als Zylinder mit einer Haupterstreckung in radialer Richtung ausgebildet sein. Dadurch kann eine besonders vorteilhafte Sicherung gegen ein Verdrehen und eine gleichzeitige Zentrierung auf besonders günstige Art und Weise durch das Zusammenspiel des Zylinders mit den Schrägflächen durchgeführt werden.

Eine besonders bevorzugte Weiterbildung der Erfindung sieht vor, dass der Gegenabschnitt von einem an der Spannpalette bzw. dem Spannmodul angeordneten, insbesondere darin eingepressten, Zylinderkörper ausgebildet wird. Dadurch ist der Gegenabschnitt auf besonders einfache Art und Weise an der Spannpalette oder dem Spannmodul vorsehbar. Auch ist denkbar, dass der Gegenabschnitt lösbar ist und somit bei einer Beschädigung günstig austauschbar ist.

Besonders bevorzugt ist, wenn im Spannmodul bzw. in der Spannpalette eine Anzahl Aussparungen vorgesehen sind, wobei in der Spannpalette bzw. im Spannmodul dieselbe Anzahl an Gegenabschnitten vorgesehen sind, und wobei lediglich in maximal zwei Aussparungen Wirkabschnitte vorgesehen sind.

Beispielsweise können vier Aussparungen im Spannmodul oder in der Spannpalette vorgesehen sein. In der Spannpalette oder dem Spannmodul kann demgegenüber dieselbe Anzahl an Gegenabschnitten vorgesehen sein. Vorzugsweise sind in lediglich maximal zwei Aussparungen Wirkabschnitte vorhanden. Damit wird eine Überbestimmtheit des Spannsystems verhindert.

Je nach Anzahl der Aussparungen kann eine unterschiedliche Taktung bereitgestellt werden. Folglich kann die Spannpalette jeweils bei vier Aussparungen um 90° gedreht werden und sodann am Spannmodul gesichert werden. Bei vier Aussparungen liegt folglich eine sogenannte 90°-Taktung vor.

Dabei kann ein Einsatzelement für ein erfindungsgemäßes Spannsystem vorgesehen sein. Dieses Einsatzelement kann insbesondere lösbar am Spannmodul oder der Spannpalette vorgesehen sein und insbesondere einstückig ausgebildet sein. Dadurch kann es auf einfache Art und Weise bei Beschädigung oder Verschleiß ausgetauscht werden. Ferner können verschiedenste Materialien und Wärmebehandlungsverfahren zur Herstellung eingesetzt werden. Weiterhin ist eine kostengünstige Fertigung möglich. Das Einsatzelement ist folglich zur Aussparung in einem Spannmodul oder in einer Spannpalette vorgesehen. Ferner weist das Einsatzelement den Wirkabschnitt auf.

Es kann ein Spannmodul für ein erfindungsgemäßes Spannsystem vorgesehen sein. Das Spannmodul weist folglich entweder den Wirkabschnitt oder den Gegenabschnitt auf.

Es ist denkbar eine Spannpalette für ein erfindungsgemäßes Spannsystem vorzusehen. Die Spannpalette weist folglich entweder den Gegenabschnitt oder den Wirkabschnitt auf.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist. Es zeigen:
Figur 1 eine Perspektivansicht eines Spannmoduls für ein erfindungsgemäßes Spannsystem;
Figur 2 eine Perspektivansicht einer Spannpalette für ein erfindungsgemäßes Spannsystem;
Figur 3 eine Perspektivansicht eines Einsatzelements für ein erfindungsgemäßes Spannsystem;
Figur 4 Seitenansicht der Darstellung gemäß Figur 3;
Figur 5 eine perspektivische Ansicht eines Ausschnitts der Darstellung gemäß Figur 1 ohne Einsatzelement;
Figur 6 eine perspektivische Ansicht eines weiteren Ausschnitts der Darstellung gemäß Figur 1; und
Figur 7 Schematische Darstellung eines Ausschnitts des erfindungsgemäßen Spannsystems im gespannten Zustand.

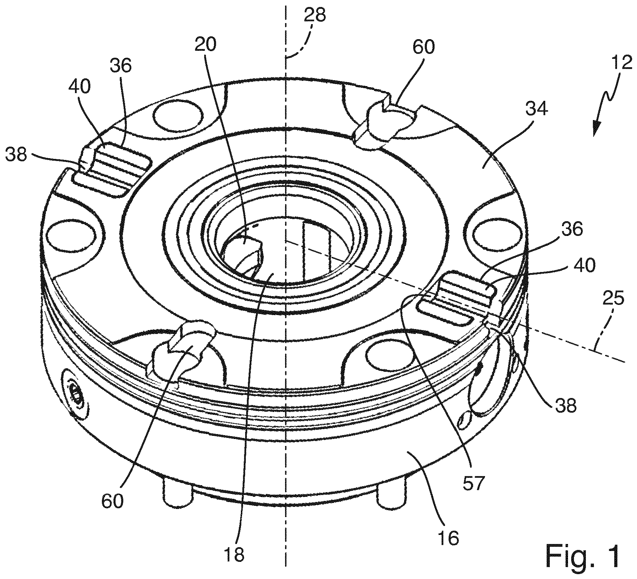

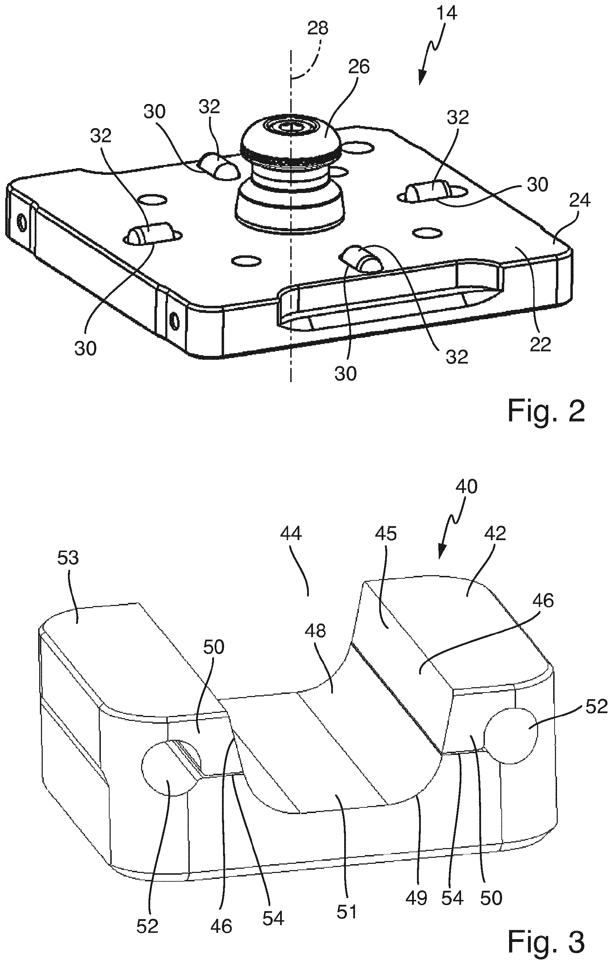

In der Figur 1 ist ein Spannmodul 12 eines Spannsystems gezeigt. Figur 2 zeigt die dazugehörige Spannpalette 14 dieses Spannsystems. Das Spannmodul 12 umfasst einen Grundkörper 16 sowie eine zentrale Spannaufnahme 18. Innerhalb des Grundkörpers 16 sind Spannmittel 20 in Form von Spannschiebern vorgesehen. Die Spannmittel 20 können dabei über einen nicht näher beschriebenen Antriebsmechanismus ihre radiale Lage zum Spannen der Spannpalette 14 ändern.

Die Spannpalette 14, die in Figur 2 als Einzelteil dargestellt ist, weist einen Palettenkörper 24 und ein auf der Unterseite 22 des Palettenkörpers 24 angeordnetes bolzenartiges Spannelement 26 auf. Das Spannelement 26 ist in die Spannaufnahme 18 in axialer Richtung 28 einführbar. Die axiale Richtung 28 entspricht auch der Mittellängsachse des Spannmoduls 12 sowie der Mittellängsachse des Spannbolzens 26 (vgl. Fig. 2). Die Spannmittel 20 können derart in radialer Richtung 25 verlagert werden, dass das Spannelement 26 in axialer Richtung in die Spannaufnahme 18 eingezogen wird. Dadurch wird die gesamte Spannpalette 14, bzw. deren Palettenkörper 24, gegen das Spannmodul 12, bzw. dessen Grundkörper 16, beaufschlagt.

Die Spannpalette 14 weist vier jeweils um 90° zueinander versetzte Aussparungen 30 auf, in die jeweils ein als Gegenabschnitt 32 ausgebildeter kreiszylindrischer Körper eingepresst ist.

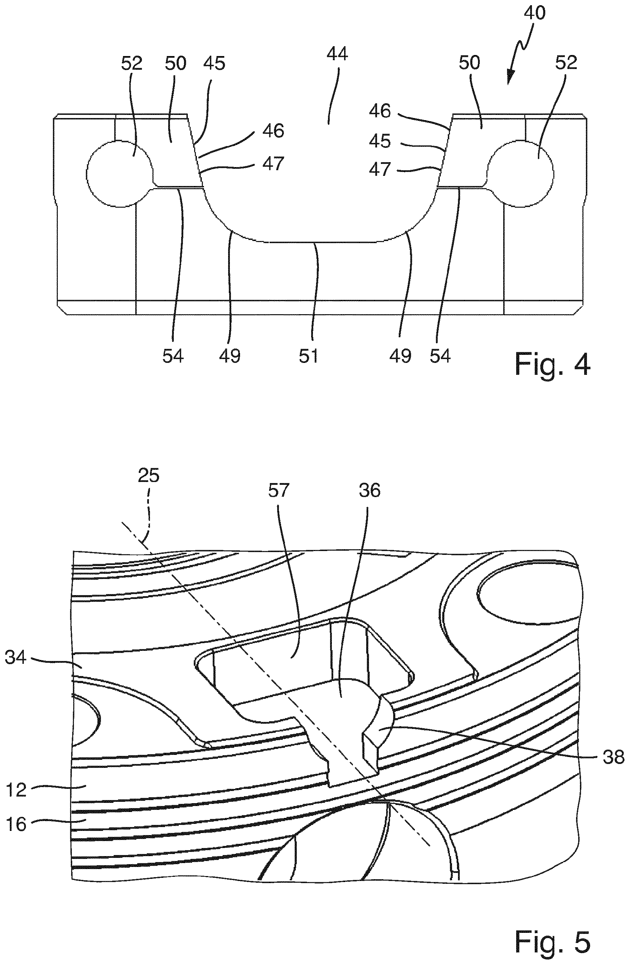

Das Spannmodul 12 weist an dessen Oberseite 34 zunächst zwei einander gegenüberliegende Aussparungen 36 auf. Diese Aussparung 36 ist in Figur 5 deutlich zu erkennen. Diese sind im radial äußeren Randbereich des Spannmoduls 12 vorgesehen und im radial äußeren bzw. in dem der Spannaufnahme 18 abgewandten Rand 38 offen. Die Aussparung wird in dem der Spannaufnahme 18 zugewandte Bereich von einer geraden, sich in Richtung der Mittellängsachse 28 erstreckenden Wand 57 begrenzt.

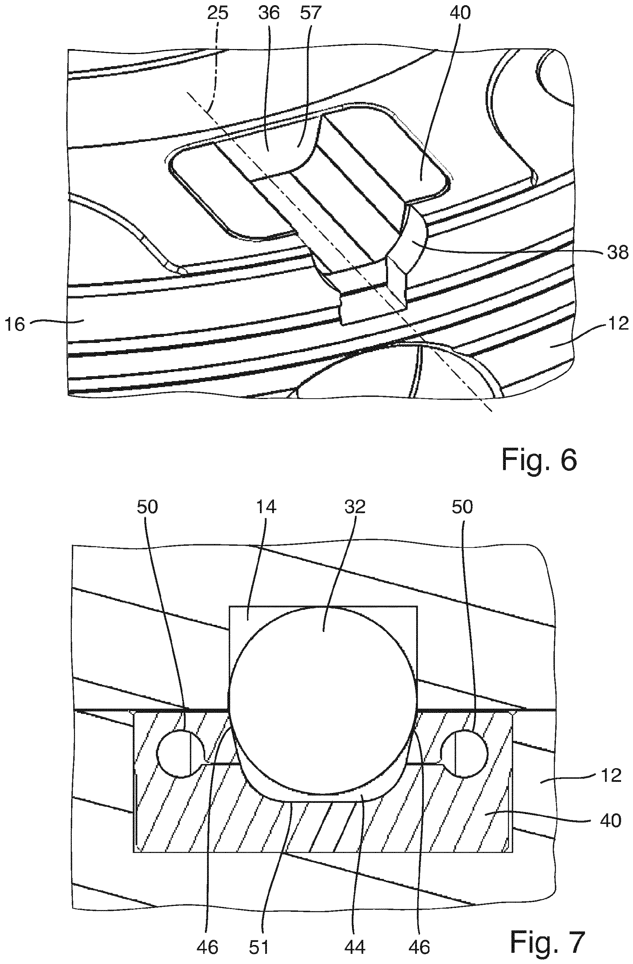

In jede dieser beiden Aussparungen ist jeweils ein einstückig ausgebildetes Einsatzelement 40, das in den Figuren 3 und 4 als Einzelteil dargestellt ist, eingepresst. Das Einsatzelement kann aus verschiedenen Materialien, wie insbesondere Stahl, hergestellt sein und unterschiedlichsten Wärmebehandlungsverfahren unterzogen worden sein. Die Außenkontur des Einsatzelements 40 ist insgesamt im Wesentlichen quaderförmig. Von der Oberseite 42 her erstreckt sich eine Aufnahme 44 in das Einsatzelement hinein. Diese Aufnahme 44 wird von zwei einander gegenüberliegenden Flächen 45 begrenzt. Diese sind jeweils als Schrägflächen 46 ausgebildet, wie in Figur 4 deutlich zu erkennen ist. Die beiden Schrägflächen 46 bilden zusammen einen Wirkabschnitt 47 aus. Zwischen den Schrägflächen 46 ist eine Verbindungsfläche 48 vorgesehen. Die Aufnahme 44 wird ferner von zwei bogenförmigen Abschnitten 49 begrenzt, die durch eine ebene Bodenfläche 51 voneinander getrennt sind. Im eingepressten Zustand (Figur 6) ist die Haupterstreckung der Aufnahme 44 folglich in radialer Richtung 25.

Die beiden Schrägflächen 46 sind an jeweils einem Kragarm 50 ausgebildet. Die beiden Kragarme 50 erstrecken sich dabei vom äußeren Rand des Einsatzelements 40 zur Aufnahme 44 hin. Die Kragarme 50 sowie die Aufnahme 44 können dabei insbesondere mittels spanabhebender Verfahren in das Einsatzelement eingebracht sein. Die Kragarme 50 sind vorliegend dadurch hergestellt, dass zunächst zwei Bohrungen 52 eingebracht worden sind und die Aufnahme 44 eingebracht wurde. Ferner wurde beispielsweise mittels eines Erodier- oder Fräsverfahrens ein Axialspalt 54 zwischen den Bohrungen 52 und der Aufnahme 44 eingebracht. Dieser Axialspalt 54 erstreckt sich in radialer Richtung 25 durch das gesamte Einsatzelement 40. Insgesamt werden dadurch zwei einander zugewandte Kragarme 50 ausgebildet. Die Kragarme 50 bilden dabei teilweise die Oberseite 42 des Einsatzelements 40 aus.

Insgesamt ist das Einsatzelement 40 spiegelsymmetrisch bezüglich einer durch die radiale Richtung 25 verlaufenden Symmetrieebene ausgebildet (vgl. Figur 6). Die Haupterstreckung des Einsatzelements 40 verläuft im eingepressten Zustand in einer Tangente zur radialen Richtung 25 (vgl. Figuren 1 und 6).

Wie in Figur 1 zu sehen ist, sind zwischen den beiden Aussparungen 36 des Spannmoduls 12 um 90° versetzt zwei einander gegenüberliegende, sich ebenfalls in eine radiale Richtung erstreckende Aussparungen 60 vorhanden.

Insgesamt ist die Funktionsweise des Spannsystems sodann wie folgt:
Zunächst wird die Spannpalette 14 an dem Spannmodul 12 zur Anlage gebracht, indem der Spannbolzen 26 in die Spannaufnahme 18 eingeführt wird. Dabei werden zunächst die Gegenabschnitte 32 in die Aussparungen 36 bzw. 60 eingeführt. Dies kann in insgesamt vier Positionen geschehen, was bedeutet, dass die Spannpalette 14 immer um 90° gedreht werden kann und wieder in die Aussparungen 36, 60 eingeführt werden kann. Dies entspricht folglich einer 90°-Taktung.

Die Gegenabschnitte 32 werden dabei mit radialem Spiel in Richtung der radialen Richtung 25 im Spannmodul 12 aufgenommen. Werden sodann die Spannmittel 20 in radialer Richtung 25 verschoben, so wird der Spannbolzen 26 in die Spannaufnahme 18 eingezogen und in axialer Richtung 28 gegen das Spannmodul und somit die Spannpalette 14 in axialer Richtung 28 gegen das Spannmodul 12 beaufschlagt. Aufgrund der Ausbildung des Spannbolzens 26 erfolgt hierbei eine radiale Zentrierung. Durch das Einziehen wird ferner der translatorische Freiheitsgrad in axialer Richtung 28 fixiert.

Weiterhin findet allerdings auch eine Zentrierung in Drehrichtung, also in eine um die axiale Richtung 28 verlaufende Kreisbahn, und eine Drehsicherung des rotatorischen Freiheitsgrads, welcher sich ebenfalls um die Mittellängsachse 28 des Spannsystems erstreckt, statt, was im Folgenden dargestellt wird:
Wie in Figur 7 dargestellt ist, kommen beim Spannen zunächst zwei Gegenabschnitte 32 an den einen Wirkabschnitt 47 ausbildenden Schrägflächen 46 der Kragarme 50 zur Anlage. Die anderen beiden der Gegenabschnitte 32 werden in den Aussparungen 60 mit Spiel aufgenommen. Wird der Spannbolzen 26 daraufhin eingezogen, so wird der Gegenabschnitt 32 am Wirkabschnitt 47 verspannt. Dies deswegen, da die Kragarme 50 elastisch nachgiebig sind, indem diese verbogen werden können. Durch dieses Verbiegen verringert sich der Axialspalt 54 oder wird sogar ganz aufgehoben. Dadurch, dass die Schrägflächen schräg ausgebildet sind, findet also zum einen ein Verspannen statt. Zum anderen findet eine Zentrierung entlang einer um die Spannaufnahme 18 verlaufenden Kreisbahn statt. Somit wird eine Drehsicherung und Lagefixierung durchgeführt. Dennoch kann ein etwaiges auf das Spannsystem wirkendes Drehmoment aufgrund der axialen Nachgiebigkeit und der tangentialen Steifheit vorteilhaft aufgenommen werden. Damit ist das System besonders zuverlässig und besitzt eine hohe Wechselwiederholgenauigkeit und ist vergleichsweise verschleißarm. Findet doch ein Verschleiß statt, so kann bzw. das Einsatzelement 40 und/oder der Gegenabschnitt 32 einfach ausgetauscht werden.

Es können selbstverständlich auch mehr als vier Aussparungen 36, 60 im Spannmodul sowie dieselbe Anzahl Gegenabschnitte 32 an der Spannpalette vorgesehen sein. Allerdings sind vorzugsweise nur maximal zwei Aussparungen 36 mit einem Einsatzelement 40 versehen, sodass eine Überbestimmtheit des Systems wirksam vermieden werden kann.

## Patentansprüche

1. Spannsystem, insbesondere Nullpunktspannsystem, mit einem eine Spannaufnahme (18) und Spannmittel (20) aufweisenden Spannmodul (12) und mit einer ein Spannelement (26) aufweisenden Spannpalette (14),
wobei das Spannelement (26) zum Spannen der Spannpalette (14) am Spannmodul (12) mit der Spannaufnahme (18) zusammenwirkt und die Spannmittel (20) in eine Verriegelungslage derart verlagerbar sind, dass die Spannpalette (14) in axialer Richtung gegen das Spannmodul (12) beaufschlagt wird,
wobei am Spannmodul (12) bzw. an der Spannpalette (14) ein zumindest abschnittsweise elastisch nachgiebiger Wirkabschnitt (47) vorgesehen ist,
wobei an der Spannpalette (14) bzw. dem Spannmodul (12) ein Gegenabschnitt (32) vorgesehen ist,
wobei der Wirkabschnitt (47) mit dem Gegenabschnitt (32) zur Drehsicherung zusammenwirkt und
wobei der Wirkabschnitt (47) zwei einander zugewandte Schrägflächen (46) umfasst, sodass der Gegenabschnitt (32) beim Spannen zwischen den Schrägflächen (46) verklemmt wird, **dadurch gekennzeichnet, dass** der Wirkabschnitt (47) in einer Aussparung (36) im Spannmodul (12) bzw. in der Spannpalette (14) vorgesehen ist, wobei der Wirkabschnitt (47) an einem Einsatzelement (40) angeordnet ist, wobei das Einsatzelement (40) in der Aussparung (36) vorgesehen ist, und wobei das Einsatzelement (40) einstückig ausgebildet ist.

2. Spannsystem nach einem der vorhergehenden Ansprüche, wobei der Wirkabschnitt (47) an einem Kragarm (50) vorgesehen ist, und wobei der Kragarm (50) beim Spannen gebogen wird.

3. Spannsystem nach einem der vorhergehenden Ansprüche, wobei die beiden Schrägflächen (46) zusammen mit einer dazwischen liegenden Verbindungsfläche (48) eine Aufnahme für den Gegenabschnitt (32) in axialer Richtung begrenzen.

4. Spannsystem nach einem der vorhergehenden Ansprüche, wobei zwei einander zugewandte Kragarme (50) vorgesehen sind, wobei jeder Kragarm (50) eine Schrägfläche (46) aufweist.

5. Spannsystem nach einem der vorhergehenden Ansprüche, wobei der Gegenabschnitt (32) zylindrisch, insbesondere kreiszylindrisch, ausgebildet ist, und wobei sich der Gegenabschnitt (32) in einer radialen Richtung (25) erstreckt, die zur axialen Richtung (28) orthogonal ist.

6. Spannsystem nach Anspruch 5, wobei der Gegenabschnitt von einem an der Spannpalette (14) bzw. dem Spannmodul (12) angeordneten, insbesondere darin eingepressten, Zylinderkörper (32) ausgebildet wird.

7. Spannsystem nach einem der vorhergehenden Ansprüche, wobei im Spannmodul (12) bzw. in der Spannpalette (14) eine Anzahl Aussparungen (36, 60) vorgesehen sind, wobei in der Spannpalette (14) bzw. im Spannmodul (12) dieselbe Anzahl an Gegenabschnitten (32) vorgesehen sind, und wobei lediglich in maximal zwei Aussparungen (36) Wirkabschnitte (47) vorgesehen sind.

## Claims

1. Clamping system, in particular a zero point clamping system, comprising a clamping module (12) having a clamping receptacle (18) and clamping means (20), and comprising a clamping pallet (14) having a clamping element (26),
wherein the clamping element (26) interacts with the clamping receptacle (18) for clamping the clamping pallet (14) on the clamping module (12) and the clamping means (20) are can be displaced into a locking position such that the clamping pallet (14) is loaded against the clamping module (12) in the axial direction,
wherein an operative portion (47), which is elastically flexible at least in portions, is provided on the clamping module (12) or on the clamping pallet (14),
wherein a counter portion (32) is provided on the clamping pallet (14) or the clamping module (12),
wherein the operative portion (47) interacts with the counter portion (32) to prevent rotation, and
wherein the operative portion (47) comprises two mutually facing oblique surfaces (46), such that the counter portion (32) is clamped between the inclined surfaces (46) during clamping, **characterized in that** the operative portion (47) is provided in a recess (36) in the clamping module (12) or in the clamping pallet (14), wherein the operative portion (47) is arranged on an insert element (40), wherein the insert element (40) is provided in the recess (36), and wherein the insert element (40) is formed in one piece.

2. Clamping system according to one of the preceding claims,
wherein the operative portion (47) is provided on a cantilever arm (50), and wherein the cantilever arm (50) is bent during clamping.

3. Clamping system according to either of the preceding claims,
wherein the two oblique surfaces (46) together with an intermediate connection surface (48) delimit a receptacle for the counter portion (32) in the axial direction.

4. Clamping system according to any of the preceding claims,
wherein two mutually facing cantilever arms (50) are provided, wherein each cantilever arm (50) has an inclined surface (46).

5. Clamping system according to any of the preceding claims,
wherein the counter portion (32) is cylindrical, in particular circular-cylindrical, and
wherein the counter portion (32) extends in a radial direction (25) orthogonal to the axial direction (28).

6. Clamping system according to claim 5,
wherein the counter portion is formed by a cylinder body (32) arranged on the clamping pallet (14) or the clamping module (12), in particular pressed therein.

7. Clamping system according to any of the preceding claims,
wherein a number of recesses (36, 60) are provided in the clamping module (12) or in the clamping pallet (14),
wherein the same number of counter portions (32) are provided in the clamping pallet (14) or in the clamping module (12), and wherein operative portions (47) are provided only in a maximum of two recesses (36).

## Revendications

1. Système de serrage, en particulier système de serrage à point zéro, avec un module de serrage (12) présentant un logement de serrage (18) et des moyens de serrage (20) et avec une palette de serrage (14) présentant un élément de serrage (26), dans lequel l'élément de serrage (26) pour le serrage de la palette de serrage (14) sur le module de serrage (12) coopère avec le logement de serrage (18) et les moyens de serrage (20) peuvent être déplacés dans une position de verrouillage, de telle sorte que la palette de serrage (14) est sollicitée dans la direction axiale contre le module de serrage (12),
dans lequel une partie active (47) au moins en partie élastiquement flexible est prévue sur le module de serrage (12) ou sur la palette de serrage (14),
dans lequel une partie homologue (32) est prévue sur la palette de serrage (14) ou le module de serrage (12),
dans lequel la partie active (47) coopère avec la partie homologue (32) pour la sécurité anti-rotation et
dans lequel la partie active (47) comprend deux surfaces inclinées (46) tournées l'une vers l'autre, de sorte que la partie homologue (32) lors du serrage est coincée entre les surfaces inclinées (46), **caractérisé en ce que** la partie active (47) est prévue dans un évidement (36) dans le module de serrage (12) ou dans la palette de serrage (14), dans lequel la partie active (47) est disposée sur un élément d'insertion (40), dans lequel l'élément d'insertion (40) est prévu dans l'évidement (36), et dans lequel l'élément d'insertion (40) est réalisé d'une seule pièce.

2. Système de serrage selon l'une quelconque des revendications précédentes,
dans lequel la partie active (47) est prévue sur un bras en porte-à-faux (50), et dans lequel le bras en porte-à-faux (50) est fléchi lors du serrage.

3. Système de serrage selon l'une quelconque des revendications précédentes, dans lequel les deux surfaces inclinées (46) délimitent conjointement avec une surface de liaison (48) située entre celles-ci un logement pour la partie homologue (32) dans la direction axiale.

4. Système de serrage selon l'une quelconque des revendications précédentes,
dans lequel deux bras en porte-à-faux (50) tournés l'un vers l'autre sont prévus, dans lequel chaque bras en porte-à-faux (50) présente une surface inclinée (46).

5. Système de serrage selon l'une quelconque des revendications précédentes,
dans lequel la partie homologue (32) est réalisée de manière cylindrique, en particulier de manière cylindrique circulaire, et
dans lequel la partie homologue (32) s'étend dans une direction radiale (25), qui est perpendiculaire à la direction axiale (28).

6. Système de serrage selon la revendication 5,
dans lequel la partie homologue est réalisée par un corps cylindrique (32) disposé sur la palette de serrage (14) ou le module de serrage (12), en particulier enfoncé dedans.

7. Système de serrage selon l'une quelconque des revendications précédentes,
dans lequel un certain nombre d'évidements (36, 60) sont prévus dans le module de serrage (12) ou dans la palette de serrage (14),
dans lequel le même nombre de parties homologues (32) sont prévues dans la palette de serrage (14) ou dans le module de serrage (12), et dans lequel les parties actives (47) sont prévues uniquement dans au maximum deux évidements (36).
